# EUROPÄISCHE PATENTSCHRIFT

(11) **EP 2 823 518 B1**
(45) Veröffentlichungstag und Bekanntmachung des Hinweises auf die Patenterteilung: **20.04.2016**
(21) Anmeldenummer: 13706918.3
(22) Anmeldetag: 14.02.2013
(51) Int. Cl.: H01M 2/10, H01M 10/04

(54) **BATTERIE FÜR EIN FAHRZEUG UND VERFAHREN ZUM FERTIGEN EINER SOLCHEN BATTERIE**
BATTERY FOR A VEHICLE AND METHOD FOR MANUFACTURING A BATTERY OF THIS KIND
BATTERIE POUR UN VÉHICULE ET PROCÉDÉ DE FABRICATION D'UNE TELLE BATTERIE

(30) Priorität: 06.03.2012 DE 102012004530
(43) Veröffentlichungstag der Anmeldung: 14.01.2015
(73) Patentinhaber: Audi AG, 85045 Ingolstadt (DE)
(72) Erfinder: SCHMIDT, Jörg, 85057 Ingolstadt (DE); HINTERBERGER, Michael, 85055 Ingolstadt (DE)
(74) Vertreter: Herbst, Matthias Heinz
(86) Internationale Anmeldenummer: PCT/EP2013/000425
(87) Internationale Veröffentlichungsnummer: WO 2013/131606

(56) Entgegenhaltungen:
- EP-A2- 1 577 966
- DE-A1-102007 063 194
- US-A1- 2012 040 223

## Beschreibung

Die Erfindung betrifft eine Batterie für ein Fahrzeug, welche eine Mehrzahl von einen Stapel bildenden Batteriezellen aufweist. Zwischen zwei Batteriezellen ist jeweils ein eigensteifer Separator angeordnet, der die beiden Batteriezellen voneinander elektrisch isoliert. Die jeweilige Batteriezelle ist hierbei von zwei Separatoren eingefasst. In einem Spalt, welcher zwischen zwei einander zugewandten Stirnseiten der die jeweilige Batteriezelle einfassenden Separatoren ausgebildet ist, ist als Dichtmaterial ein Dichtschaum angeordnet ist. Durch die Separatoren sind im Zusammenwirken mit dem Dichtschaum eine geschlossene Bodenplatte und wenigstens eine an die Bodenplatte angrenzende, geschlossene Seitenwand gebildet. Der Stapel der Batteriezellen ist in einem von der wenigstens einen Seitenwand umgebenen Aufnahmeraum angeordnet. Die Batteriezellen sind in dem Stapel gegeneinander gepresst angeordnet, wobei durch äußere Begrenzungswände des Stapels ein Pressdruck aufrechterhalten ist. Des Weiteren betrifft die Erfindung ein Verfahren zum Fertigen einer solchen Batterie.

Für die Anwendung in Hochvolt-Energiespeichern, wie sie beispielsweise in Elektrofahrzeugen oder Hybridfahrzeugen verwendet werden, werden häufig prismatische Batteriezellen verwendet, welche beispielsweise als Lithium-Ionen-Zellen ausgebildet sein können. Die Zellen werden dabei in einem Stapel oder Stack aneinandergereiht, verpresst und elektrisch miteinander verbunden. In einem solchen Stapel oder Modul besteht die Anforderung, dass die Batteriezellen voneinander elektrisch isoliert sind. Hierfür werden jeweils zwischen zwei Batteriezellen Separatoren angeordnet, welche auch als Spacer bezeichnet werden.

Derartige Spacer können auch als Halbschalen ausgebildet sein, welche eine jeweilige Batteriezelle von zwei Seiten her einfassen.

Die EP 1 577 966 A2 beschreibt eine Batterie für ein Fahrzeug mit einer Mehrzahl von Batteriezellen. Eine jeweilige Batteriezelle ist hierbei von jeweils zwei eigensteifen, aus einem Harz gebildeten Rahmen eingefasst. Die Rahmen weisen eine Aussparung auf, in welcher die jeweilige Batteriezelle aufgenommen ist. Auf Stirnseiten von aneinander angrenzenden Rahmen sind ein Urethanschaum und ein Harz als Dichtmaterial angeordnet. Im Zusammenwirken mit diesem elastischen Dichtmaterial bilden die Rahmen eine geschlossene Bodenplatte und an die Bodenplatte angrenzende geschlossene Seitenwände eines Gehäuses der Batterie. Zum Fixieren der Rahmen aneinander sind an diesen Vorsprünge und mit den Vorsprüngen korrespondierende Auskehlungen vorgesehen. Kerben in den Vorsprüngen verbessern hierbei ein Verriegeln der Rahmen miteinander. Um den Zusammenhalt der miteinander gekoppelten Rahmen zu verbessern, kann eine sich bei Hitze zusammenziehende Folie um einen Stapel der Rahmen herum angeordnet und dann mit Wärme beaufschlagt werden. Die Kopplungsstärke zwischen den Rahmen wird so verstärkt.

Die DE 10 2007 063 194 A1 beschreibt einen Zellenverbund aus mehreren miteinander verschalteten Einzelzellen, die wärmeleitend mit einer Wärmeleitplatte verbunden sind, wobei in Hohlräumen zwischen den Einzelzellen ein Füllmaterial angeordnet ist. Das Füllmaterial bewirkt die elektrische Isolation von benachbarten Einzelzellen. Als Füllmaterial kann ein Füllschaum wie etwa ein aushärtender Weichschaum, insbesondere ein Polyurethanschaum oder ein Silikonschaum zum Einsatz kommen.

Die US 2012/0040223 A1 beschreibt eine Batteriezelle, welche zwischen zwei Rahmen angeordnet ist. Kühlrippen der Rahmen umfassen Paare thermisch leitfähiger Platten, welche voneinander durch einen komprimierbaren Schaum getrennt sind. Der Schaum ermöglicht eine Expansion oder Kontraktion der Batteriezelle im Betrieb.

Die DE 10 2009 011 656 A1 beschreibt ein Verfahren zum Fertigen einer Batterie für einen Elektroantrieb in einem Fahrzeug, bei welcher Rundzellen in Halbschalen-Aufnahmen angeordnet werden. Jeweils zwei Halbschalen-Aufnahmen fassen hierbei zwei nebeneinander angeordnete Rundzellen von der Seite her ein, wobei zwischen den beiden Halbschalen eine Fuge ausgebildet ist. Auf die Rundzellen wird vor deren Einbringen in die Halbschalen eine aushärtbare Vergussmasse aufgebracht, um Fertigungstoleranzen der Rundzellen zu kompensieren.

Des Weiteren beschreibt die US 2011/0159339 A1 eine Batterie mit einem Gehäuse, in welchem eine Mehrzahl von Batteriezellen angeordnet ist, wobei zwischen einer Wärmeleitplatte und elektrischen Polen der Batteriezellen sowie zwischen einem Zellverbinder und einem Gehäusedeckel ein elektrisch isolierender und wärmeleitfähiger Schaum angeordnet wird. Auch ein jeweiliger Zwischenraum zwischen den Batteriezellen sowie zwischen den Batteriezellen und Wänden des Gehäuses der Batterie wird mit diesem Schaum aufgefüllt.

Die US 3 919 371 A beschreibt eine Blei-Säure-Batterie mit einem Gehäuse, in welchem die Elektrodenplatten einer einzelnen Batteriezelle aufgenommen sind. Ein Hohlraum zwischen einem Deckel, welcher das Gehäuse oberseitig abdeckt, und einem Polanschluss ist mit einem aufgeschäumten thermoplastischen Material befüllt.

Die DE 26 30 240 A1 beschreibt eine Batteriescheiderumhüllung zum Umschließen von Batterieplatten für eine mit Säure zu füllende Bleibatterie. Hierbei werden durch das Batteriescheidermaterial Wände und ein Basisbereich gebildet. Nach dem Einbringen der Batterieplatte in eine durch das Batteriescheidermaterial gebildete, die Form eines Buchumschlags aufweisende Umhüllung wird die noch offene Seite der Hülle mit einem Schaummaterial verfüllt.

Aufgabe der vorliegenden Erfindung ist es, eine Batterie der eingangs genannten Art sowie ein Verfahren zum Fertigen einer solchen Batterie zu schaffen, welche bzw. welches auf besonders einfache Weise einen Schutz vor einer Beaufschlagung eines Gehäuses der jeweiligen Batteriezelle mit das Gehäuse angreifenden Substanzen ermöglicht.

Diese Aufgabe wird durch eine Batterie mit den Merkmalen des Patentanspruchs 1 und durch ein Verfahren mit den Merkmalen des Patentanspruchs 5 gelöst. Vorteilhafte Ausgestaltungen mit zweckmäßigen Weiterbildungen der Erfindung sind in den abhängigen Patentansprüchen angegeben.

Bei der erfindungsgemäßen Batterie ist in einem Spalt, welcher zwischen zwei einander zugewandten Stirnseiten der die jeweilige Batteriezelle einfassenden Separatoren ausgebildet ist, als Dichtmaterial ein Dichtschaum angeordnet. Der Dichtschaum verhindert wirkungsvoll ein Eindringen von Wasser oder feuchter Luft in den Spalt, sodass das - üblicherweise metallische - Gehäuse der Batteriezellen vor einem korrosiven Angriff geschützt ist. Dies gilt insbesondere, wenn das Wasser oder die feuchte Luft Salze enthält.

Das Einbringen des Dichtschaums in den Spalt ist zudem besonders prozesssicher durchführbar, und außerdem kann die Qualität der Abdichtung sehr gut optisch erkannt und somit überprüft werden.

Durch die Separatoren werden im Zusammenwirken mit dem Dichtschaum eine geschlossene Bodenplatte und wenigstens eine an die Bodenplatte angrenzende, geschlossene Seitenwand gebildet, wobei der Stapel der Batteriezellen in einem von der wenigstens einen Seitenwand umgebenen Aufnahmeraum angeordnet ist. Dann ist durch die Separatoren und den Dichtschaum ein zu den Seiten und zum Boden hin hermetisch dichtes Gehäuse um den Stapel gebildet. Ein solches Gehäuse kann besonders einfach zu einer weiteren Seite hin verschlossen werden, um eine Batterie mit einem zu allen Seiten hin vor Umwelteinflüssen geschützten Stapel zu schaffen.

Die Batteriezellen sind in dem Stapel gegeneinander gepresst angeordnet, wobei durch äußere Begrenzungswände des Stapels ein Pressdruck aufrechterhalten ist. So kann besonders gut sichergestellt werden, dass auch die durch den Dichtschaum bereitgestellte Dichtigkeit aufrechterhalten bleibt. In dem mit dem Pressdruck beaufschlagten Stapel ist der Spalt von außen zugänglich.

Damit die Batterie nicht mehr als den notwendigen Bauraum einnimmt, ist es günstig, wenn die Separatoren vergleichsweise dünnwandig ausgebildet sind. Entsprechend schmal sind dann auch die einander zugewandten Stirnseiten der Separatoren. Dies gestaltet es schwierig, prozesssicher ein anderes Dichtmittel als den Dichtschaum auf die Stirnseiten aufzutragen. Durch das Vorsehen des Dichtschaums anstelle des auf die Stirnseiten aufzutraenden Dichtmittels lässt sich demgegenüber besonders gut sicherstellen, dass dieser auch tatsächlich die geforderte Dichtwirkung aufbringt. Da der Dichtschaum nachträglich, also nach dem Verpressen der Batteriezellen in den Spalt eingebracht werden kann, kann das Einstreichen der Stirnseiten der Separatoren vor dem Verpressen des Stapels entfallen.

Zudem können durch das Einbringen des Dichtschaums in den Spalt sehr gut Fertigungstoleranzen der Separatoren und/oder der Batteriezellen ausgeglichen werden. Durch das Einbringen des Dichtschaums in den Spalt lässt sich zudem eine Prüfung der Dichtigkeit nach dem Verpressen bedeutend einfacher durchführen als bei einem nur schwer prozesssicher zu gestaltenden Auftragen eines Dichtmaterials vor dem Verpressen.

In einer vorteilhaften Ausgestaltung der Erfindung füllt der Dichtschaum den Spalt vollständig aus. Somit wird über die gesamte Länge des Spalts hinweg die Batteriezelle zuverlässig vor einer Beaufschlagung mit das Gehäuse angreifenden Substanzen geschützt.

Als weiter vorteilhaft hat es sich gezeigt, wenn durch die Separatoren im Zusammenwirken mit dem Dichtschaum die jeweils eingefasste Batteriezelle zu zumindest einer Seite der Batteriezelle hin wasserdicht umschlossen ist. Damit isolieren die Separatoren die Batteriezellen nicht nur elektrisch, sondern sie schützen diese auch gegenüber Umwelteinflüssen, da zumindest von dieser Seite her Wasser und Luftfeuchtigkeit nicht zu dem Gehäuse der Batteriezelle gelangen kann.

In einer weiteren vorteilhaften Ausgestaltung der Erfindung nimmt der Dichtschaum in einem Grundzustand ein erstes Volumen und in einem expandierten Zustand ein gegenüber dem ersten Volumen vergrößertes Volumen ein, wobei der in dem Spalt in dem expandierten Zustand vorliegende Dichtschaum einen Pressdruck auf die angrenzenden Separatoren ausübt. So kann der Dichtschaum in dem Grundzustand in den Spalt eingebracht werden, dann expandiert der Dichtschaum, und eine besonders gute Abdichtung des Spalts ist erreicht.

Bei dem erfindungsgemäßen Verfahren zum Fertigen einer Batterie für ein Fahrzeug werden eine Mehrzahl von Batteriezellen so angeordnet, dass sie einen Stapel bilden. Zwischen zwei Batteriezellen wird jeweils ein eigensteifer Separator angeordnet, welcher die beiden Batteriezellen elektrisch voneinander isoliert. Hierbei wird eine jeweilige Batteriezelle von zwei Separatoren eingefasst. In einem Spalt, welcher zwischen zwei einander zugewandten Stirnseiten der die jeweilige Batteriezelle einfassenden Separatoren ausgebildet ist, wird als Dichtmaterial ein Dichtschaum angeordnet. Durch diesen lässt sich besonders gut eine Beaufschlagung eines Gehäuses der jeweiligen Batteriezelle mit dieses Gehäuse angreifenden Substanzen verhindern. Durch die Separatoren werden im Zusammenwirken mit dem Dichtschaum eine geschlossene Bodenplatte und wenigstens eine an die Bodenplatte angrenzende, geschlossene Seitenwand gebildet, wobei der Stapel der Batteriezellen in einem von der wenigstens einen Seitenwand umgebenen Aufnahmeraum angeordnet ist.

Die für die erfindungsgemäße Batterie beschriebenen Vorteile und bevorzugten Ausführungsformen gelten auch für das erfindungsgemäße Verfahren und umgekehrt.

Erfindungsgemäß wird der Dichtschaum nach einem Verpressen der Batteriezellen von außen in den Spalt eingebracht. Dadurch entfällt das mühselige und nur schwer prozesssicher zu gestaltende Aufbringen eines Dichtmaterials auf die Stirnseiten vor dem Verpressen der Batteriezellen. Zudem ist der Spalt von außen gut zugänglich, und die Qualität der durch den Dichtschaum bewirkten Abdichtung des Spalts lässt sich von außen besonders einfach optisch erkennen und somit überprüfen.

Als weiter vorteilhaft hat es sich gezeigt, wenn der Dichtschaum mittels einer Dosiervorrichtung in den Spalt eingebracht wird. So kann sichergestellt werden, dass eine ausreichende, jedoch nicht zu große Menge an Dichtschaum verwendet wird.

Besonders einfach und automatisiert lässt sich das Einbringen des Dichtschaums in den Spalt realisieren, wenn die Dosiervorrichtung von einem Roboter geführt wird.

Schließlich hat es sich als vorteilhaft gezeigt, wenn vor dem Einbringen des Dichtschaums in den Spalt elektrische Eigenschaften der Batteriezellen geprüft werden. So kann festgestellt werden, ob ein Fehler in einer Batteriezelle vorliegt, und die entsprechende Batteriezelle kann ausgetauscht werden. Da hierbei die Separatoren noch nicht mit dem Dichtschaum beaufschlagt sind, lassen diese sich besonders gut für eine ausgetauschte, intakte Batteriezelle wieder verwenden.

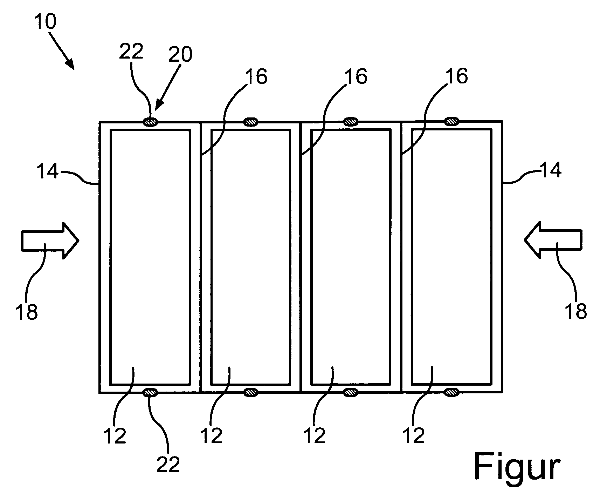

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt stark schematisiert eine Batterie für ein Fahrzeug, bei welcher die einzelnen Batteriezellen von aus einem Kunststoff gebildeten Spacern in Form von Halbschalen eingehaust sind, wobei ein zwischen jeweils zwei Halbschalen ausgebildeter Spalt mit einem Dichtschaum ausgefüllt ist.

Eine in der Figur schematisch und in einer Draufsicht von oben gezeigte Batterie 10 weist eine Mehrzahl von Batteriezellen 12 auf, welche insbesondere als Lithium-Ionen-Zellen ausgebildet sein können. Damit die Batterie 10 in einem Fahrzeug als Traktionsbatterie verwendet werden kann, wird üblicherweise eine Vielzahl dieser Batteriezellen 12 elektrisch miteinander verschaltet.

Die vorliegend prismatischen Batteriezellen 12 sind durch jeweils zwei Separatoren oder Spacer 14, 16 eingehaust. Diese eigensteifen und aus einem wasserdichten Kunststoff gebildeten Spacer 14, 16 schirmen die einzelne Batteriezelle 12 gegenüber einem Eindringen von Wasser oder feuchter Luft ab und dienen somit dem Korrosionsschutz eines metallischen, insbesondere aus Aluminium gebildeten, Gehäuses der jeweiligen Batteriezelle 12. Zudem isolieren die Spacer 16 die Batteriezellen 12 elektrisch voneinander.

Damit die Batterie 10 möglichst wenig Bauraum beansprucht, werden die als Halbschalen ausgebildeten Spacer 14, 16 sehr dünnwandig ausgeführt. Die Spacer 14, 16 werden hierbei bevorzugt so dünn gestaltet, dass die elektrischen Isolationsanforderungen gerade eben erfüllt werden. Entsprechend schmal sind damit auch die einander zugewandten Stirnseiten von jeweils zwei aneinander angrenzenden Spacern 14, 16.

Dies gestaltet es schwierig, vor einem Verpressen der Batteriezellen 12, also vor einem Beaufschlagen des Zellstapels mit einem Pressdruck, welcher in der Figur durch Pfeile 18 veranschaulicht ist, prozesssicher ein Dichtmittel auf die Stirnseiten aufzutragen. Zudem ist es schwierig, den Erfolg der Dichtwirkung eines solchen vorab aufgetragenen Dichtmittels nach dem Verpressen zu überprüfen.

Vorliegend werden daher zunächst die den Stapel bildenden Batteriezellen 12 verpresst, also mit dem Pressdruck beaufschlagt. Dies führt dazu, dass die Spacer 14, 16 bis auf einen minimalen, zwischen den einander gegenüberliegenden Stirnseiten ausgebildeten Spalt 20 zusammengedrückt werden. Dieser Spalt 20 wird anschließend, also nach dem Verpressen des Stapels, mit einem Dichtschaum 22 beaufschlagt.

Nach dem Einbringen des Dichtschaums 22 in den Spalt 20 von außen dehnt sich der Dichtschaum 22 aus und dichtet den Spalt 20 komplett ab. Das Ausschäumen des Spalts 20 von außen kann hierbei insbesondere maschinell geführt, also etwa durch einen Industrieroboter vorgenommen werden.

Dadurch, dass der Dichtschaum 22 von außen in die Spalte 20 zwischen den Spacern 14, 16 eingebracht wird, welche in dem bereits verpressten Stapel vorhanden sind, kann auch sehr gut optisch geprüft werden, ob tatsächlich der Dichtschaum 22 im Bereich der Spalte 20 für die gewünschte Dichtigkeit sorgt.

Vorliegend werden die Batteriezellen 12 zunächst verpresst und anschließend elektrisch geprüft. So kann festgestellt werden, ob etwa infolge des Verpressvorgangs Fehler oder Beschädigungen an den Batteriezellen 12 aufgetreten sind, und defekte Batteriezellen 12 können ausgetauscht werden.

Da zwischen den einzelnen Spacern 14, 16 hierbei noch kein Dichtmittel vorliegt, können die Spacer 14, 16 einer fehlerhaften Batteriezelle 12 für das Einhausen einer intakten, neuen Batteriezelle 12 wieder verwendet werden. Wenn festgestellt ist, dass alle Batteriezellen 12 des Stapels in Ordnung sind, werden die Spalte 20 mit dem Dichtschaum 22 ausgeschäumt.

Durch die Separatoren 14, 16 wird im Zusammenwirken mit dem Dichtschaum 22 eine geschlossene Bodenplatte des Stapels sowie ein die Gesamtheit der Batteriezellen 12 des Stapels außenumfangsseitig umschließendes Gehäuse gebildet. Dieses braucht dann nach oben hin lediglich noch mit einem Deckel versehen zu werden, um den Stapel insgesamt hermetisch gegenüber Umwelteinflüssen abzuschirmen.

## Patentansprüche

1. Batterie für ein Fahrzeug, mit einer Mehrzahl von einen Stapel bildenden Batteriezellen (12), wobei zwischen zwei Batteriezellen (12) jeweils ein eigensteifer Separator (16) angeordnet ist, welcher die beiden Batteriezellen (12) voneinander elektrisch isoliert, und wobei eine jeweilige Batteriezelle (12) von zwei Separatoren (14, 16) eingefasst ist, wobei in einem Spalt (20), welcher zwischen zwei einander zugewandten Stirnseiten der die jeweilige Batteriezelle (12) einfassenden Separatoren (14, 16) ausgebildet ist, als Dichtmaterial ein Dichtschaum (22) angeordnet ist, wobei durch die Separatoren (14, 16) im Zusammenwirken mit dem Dichtschaum (22) eine geschlossene Bodenplatte und wenigstens eine an die Bodenplatte angrenzende, geschlossene Seitenwand gebildet sind, wobei der Stapel der Batteriezellen (12) in einem von der wenigstens einen Seitenwand umgebenen Aufnahmeraum angeordnet ist, wobei die Batteriezellen (12) in dem Stapel gegeneinander gepresst angeordnet sind, und wobei durch äußere Begrenzungswände des Stapels ein Pressdruck aufrechterhalten ist,
**dadurch gekennzeichnet, dass**
in dem mit dem Pressdruck beaufschlagten Stapel der Spalt (20) von außen zugänglich ist.

2. Batterie nach Anspruch 1,
**dadurch gekennzeichnet, dass**
der Dichtschaum (22) den Spalt (20) vollständig ausfüllt.

3. Batterie nach Anspruch 1 oder 2,
**dadurch gekennzeichnet, dass**
durch die Separatoren (14, 16) im Zusammenwirken mit dem Dichtschaum (22) die jeweils eingefasste Batteriezelle (12) zu zumindest einer Seite der Batteriezelle (12) hin wasserdicht umschlossen ist.

4. Batterie nach einem der Ansprüche 1 bis 3,
**dadurch gekennzeichnet, dass**
der Dichtschaum (22) in einem Grundzustand ein erstes Volumen und in einem expandierten Zustand ein gegenüber dem ersten Volumen vergrößertes Volumen einnimmt, wobei der Dichtschaum (22) in dem Spalt (20) in dem expandierten Zustand vorliegt.

5. Verfahren zum Fertigen einer Batterie (10) für ein Fahrzeug, bei welchem eine Mehrzahl von Batteriezellen (12) einen Stapel bildend angeordnet werden, wobei zwischen zwei Batteriezellen (12) jeweils ein eigensteifer Separator (16) angeordnet wird, welcher die beiden Batteriezellen (12) voneinander elektrisch isoliert, und wobei eine jeweilige Batteriezelle (12) von zwei Separatoren (14, 16) eingefasst wird,
wobei in einem Spalt (20), welcher zwischen zwei einander zugewandten Stirnseiten der die jeweilige Batteriezelle einfassenden Separatoren (14, 16) ausgebildet ist, als Dichtmaterial ein Dichtschaum (22) angeordnet wird, wobei durch die Separatoren (14, 16) im Zusammenwirken mit dem Dichtschaum (22) derart eine geschlossene Bodenplatte und wenigstens eine an die Bodenplatte angrenzende, geschlossene Seitenwand gebildet werden, dass der Stapel der Batteriezellen (12) in einem von der wenigstens einen Seitenwand umgebenen Aufnahmeraum angeordnet wird,
**dadurch gekennzeichnet, dass**
der Dichtschaum (22) nach einem Verpressen (18) der Batteriezellen (12) von außen in den Spalt (20) eingebracht wird.

6. Verfahren nach Anspruch 5,
**dadurch gekennzeichnet, dass**
der Dichtschaum (22) mittels einer, insbesondere von einem Roboter geführten, Dosiervorrichtung in den Spalt (20) eingebracht wird.

7. Verfahren nach Anspruch 5 oder 6,
**dadurch gekennzeichnet, dass**
vor dem Einbringen des Dichtschaums (22) in den Spalt (20) elektrische Eigenschaften der Batteriezellen (12) geprüft werden.

## Claims

1. Battery for a motor vehicle, with a number of battery cells (12) forming a stack, wherein a self-rigid separator (16) is arranged between any two adjacent battery cells (12), which electrically insulates the two cells (12) from one another, with each battery cell (12) being enclosed by two separators (14, 16), in which, in a gap (20) that is formed between the two end faces of the separators (14, 16) that enclose each battery cell, a foam sealant (22) is arranged to form a seal, whereby the separators (14, 16), in combination with the foam sealant (22), form a closed bottom plate and at least one closed side wall adjoining the bottom plate, whereby the stack of battery cells (12) is arranged in a mounting frame enclosing at least one side wall, whereby the battery cells (12) in the stack are arranged pressed against one another and whereby pressure on the stack is maintained by external boundary walls, **characterised in that** the gap (20) in the stack subjected to pressure is externally accessible.

2. Battery according to claim 1, **characterised in that** the sealant foam (22) completely fills the gap (20).

3. Battery according to claim 1 or 2, **characterised in that** the enclosure of the battery cell (12) by the enclosing separators (14, 16) in combination with the sealant foam (22) is watertight on at least one side of the battery cell (12).

4. Battery according to one of claims 1 to 3, **characterised in that** in a base state, the foam sealant (22) occupies a first volume and in, an expanded state, a larger volume relative to the first volume, whereby the foam sealant (22) in the gap (20) is in the expanded state.

5. Method of manufacturing a battery (10) for a motor vehicle in which a number of battery cells (12) form a stack, in which a self-rigid separator (16) is arranged between any two adjacent battery cells (12), which electrically insulates the two cells (12) from one another, with each battery cell (12) being enclosed by two separators (14, 16), in which, in a gap (20) that is formed between the two end faces of the separators (14, 16) that enclose each battery cell, a foam sealant (22) is arranged to form a seal, whereby the separators (14, 16), in combination with the foam sealant (22), form a closed bottom plate and at least one closed side wall adjoining the bottom plate, whereby the stack of battery cells (12) is arranged in a mounting frame enclosing at least one side wall, **characterised in that** the foam sealant (22) is inserted externally in the gap (20) after the battery cells (12) are pressed together (18).

6. Method according to claim 5, **characterised in that** the foam sealant (22) is inserted in the gap (20) by means of a dosing device, especially one that is guided by a robot.

7. Method according to claim 5 or 6, **characterised in that** before the foam sealant (22) is inserted in the gap (20), electrical properties of the battery cells (12) are tested.

## Revendications

1. Batterie pour un véhicule, avec une multiplicité de cellules de batterie (12) formant une pile, un séparateur (16) intrinsèquement rigide qui isole électriquement l'une de l'autre deux cellules de batterie (12) étant agencé à chaque fois entre les deux cellules de batterie (12) et une cellule de batterie (12) respective étant encadrée par deux séparateurs (14, 16),
une mousse d'étanehéité (22) étant agencée comme matériau d'étanchéité dans une fente (20) qui est conçue entre deux côtés frontaux, se faisant face l'un l'autre, des séparateurs (14, 16) encadrant la cellule de batterie (12) respective, une plaque de fond fermée et au moins une paroi latérale fermée, adjacente à la plaque de fond, étant formées par les séparateurs (14, 16) en coopération avec la mousse d'étanchéité (22), la pile des cellules de batterie (12) étant agencée dans un espace de logement entouré par l'au moins une paroi latérale, les cellules de batterie (12) étant agencées, pressées les unes contre les autres, dans la pile et une pression étant maintenue par des parois de délimitation extérieures de la pile,
**caractérisée en ce que**, dans la pile contrainte par la pression, la fente (20) est accessible de l'extérieur.

2. Batterie selon la revendication 1, **caractérisée en ce que** la mousse d'étanchéité (22) remplit complètement la fente (20).

3. Batterie selon la revendication 1 ou 2, **caractérisée en ce que** la cellule de batterie (12) respectivement encadrée est entourée de manière étanche à l'eau au moins d'un côté de la cellule de batterie (12) par les séparateurs (14, 16) en coopération avec la mousse d'étanchéité (22).

4. Batterie selon l'une des revendications 1 à 3, **caractérisée en ce que** la mousse d'étanchéité (22) prend dans un état initial un premier volume et dans un état expansé un volume plus grand que le premier volume, la mousse d'étanchéité (22) se trouvant dans la fente (20) dans l'état expansé.

5. Procédé de fabrication d'une batterie (10) pour un véhicule, selon lequel on agence une multiplicité de cellules de batterie (12) en formant une pile, un séparateur (16) intrinsèquement rigide qui isole électriquement l'une de l'autre deux cellules de batterie (12) étant agencé à chaque fois entre les deux cellules de batterie (12) et une cellule de batterie (12) respective étant encadrée par deux séparateurs (14, 16),
une mousse d'étanchéité (22) étant agencée comme matériau d'étanchéité dans une fente (20) qui est conçue entre deux côtés frontaux, se faisant face l'un l'autre, des séparateurs (14, 16) encadrant la cellule de batterie respective, une plaque de fond fermée et au moins une paroi latérale fermée, adjacente à la plaque de fond, étant formées par les séparateurs (14, 16) en coopération avec la mousse d'étanchéité (22), la pile des cellules de batterie (12) étant agencée dans un espace de logement entouré par l'au moins une paroi latérale,
**caractérisé en ce que**, après avoir pressé (18) les cellules de batterie (12) les unes contre les autres, on introduit de l'extérieur la mousse d'étanchéité (22) dans la fente (20).

6. Procédé selon la revendication 5, **caractérisé en ce que** l'on introduit la mousse d'étanchéité (22) dans la fente (20) au moyen d'un dispositif de dosage, guidé notamment par un robot.

7. Procédé selon la revendication 5 ou 6, **caractérisé en ce que**, avant d'introduire la mousse d'étanchéité (22) dans la fente (20), on contrôle les propriétés électriques des cellules de batterie (12).
